# EUROPEAN PATENT APPLICATION

(11) **EP 2 056 383 A1**
(43) Date of publication of application: **06.05.2009**
(21) Application number: 08253560.0
(22) Date of filing: 30.10.2008
(51) Int. Cl.: H01M 8/02, H01M 4/96, H01M 4/86, H01M 8/16, C01B 31/02

(54) **Membrane electrode assembly and method for making the same**

(30) Priority: 02.11.2007 CN 200710124248; 02.11.2007 CN 200710124247; 19.12.2007 CN 200710125266; 25.07.2008 CN 200810142523; 25.07.2008 CN 200810142524
(71) Applicant: Tsing Hua University, Haidian District Beijing City (CN); Hon Hai Precision Industry Co., Ltd., Tu-cheng City, Taipei Hsien (TW)
(72) Inventor: Liu, Chang-Hong, Haidian District Beijing City (CN); Jiang, Kai-Li, Haidian District Beijing City (CN); Fan, Shou-Shan, Haidian District Beijing City (CN); Zhang, Li-Na, Haidian District Beijing City (CN); Li, Lei, Haidian District Beijing City (CN)
(74) Representative: Stuttard, Garry Philip

(57) **Abstract**

A membrane electrode assembly comprises a proton exchange membrane, an anode and a cathode. The anode is located on one surface of the proton exchange membrane and the cathode is located on the other surface of the proton exchange membrane. Both the anode and the cathode comprises a gas diffusion layer and catalyst. At least one of the gas diffusion layers comprises at least one carbon nanotube structure.

## Description

### 1. Field of the Invention

The invention generally relates to membrane electrode assemblies and methods for making the same.

### 2. Discussion of Related Art

Fuel cells can generally be classified into alkaline, solid oxide, and proton exchange membrane fuel cells. The proton exchange membrane fuel cell has received increasingly more attention and has developed rapidly in recent years. Typically, the proton exchange membrane fuel cell includes a number of separated fuel cell work units. Each work unit includes a fuel cell membrane electrode assembly (MEA), flow field plates (FFP), current collector plates (CCP), as well as related support equipment, such as blowers, valves, and pipelines.

The MEA generally includes a proton exchange membrane and two electrodes separately located on two opposite surfaces of the proton exchange membrane. Furthermore, each electrode includes a catalyst layer and a gas diffusion layer. The catalyst layer is configured for being sandwiched between the gas diffusion layer and the proton exchange membrane. The material of the proton exchange membrane is selected from the group comprising perfluorosulfonic acid, polystyrene sulfonic acid, polystyrene trifluoroacetic acid, phenol formaldehyde resin acid, and hydrocarbons. The catalyst layer includes catalyst materials and carriers. The catalyst materials are selected from the group comprising metal particles, such as platinum particles, gold particles, ruthenium particles and combination threreof. The carriers are generally carbon particles, such as graphite, carbon black, carbon fiber or carbon nanotubes. The gas diffusion layer is constituted of treated carbon cloth and carbon paper.

The gas diffusion layer of MEA is mainly formed by a carbon fiber paper. A process of making the carbon fiber paper is by the steps of: mixing carbon fibers, wood pulp, and cellulose fibers; using the mixture to obtain a paper pulp; and then forming the carbon fiber paper from the paper pulp. However, the process of making the carbon fiber paper has the following disadvantages: Firstly, the carbon fibers in the carbon fiber paper are not uniformly dispersed, and therefore, the gaps therein are uneven resulting in the carbon fibers having a small specific surface area. Thus, the structure restricts the gas diffusion layer to uniformly diffuse the gases, which is needed for the MEA. Secondly, the carbon fiber paper has high electrical resistance, thereby restricting the transfer of electrons between the gas diffusion layer and the external electrical circuit. As a result, the reaction activity of the MEA is reduced. Thirdly, the carbon fiber paper has poor tensile strength and is difficult to process.

What is needed, therefore, is a membrane electrode assembly having excellent reaction activity and a simile and easily applicable method for making the same.

### BRIEF DESCRIPTION OF THE DRAWINGS

Many aspects of the present membrane electrode assembly and the method for making the same can be better understood with references to the following drawings. The components in the drawings are not necessarily drawn to scale, the emphasis instead being placed upon clearly illustrating the principles of the present membrane electrode assembly and the method for making the same.

FIG. 1 is a schematic view of a membrane electrode assembly in accordance with the first embodiment.

FIG 2 is a Scanning Electron Microscope (SEM) image of the drawing carbon nanotube film obtained by pulling an array of carbon nanotubes.

FIG. 3 is a structural schematic of a carbon nanotube segment.

FIG. 4 is a Scanning Electron Microscope (SEM) image of a untwisted carbon nanotube wire.

FIG. 5 is a Scanning Electron Microscope (SEM) image of a twisted carbon nanotube wire.

FIG. 6 is a Scanning Electron Microscope (SEM) image of the pressing carbon nanotube film obtained by pressing an array of carbon nanotubes with a planar pressure head.

FIG. 7 is a Scanning Electron Microscope (SEM) image of the pressing carbon nanotube film obtained by pressing an array of carbon nanotubes with a roller-shaped pressure head.

FIG 8 is a Scanning Electron Microscope (SEM) image of the flocculent carbon nanotube film.

FIG. 9 is a schematic view of a fuel cell in accordance with the first embodiment.

FIG. 10 is a schematic view of a membrane electrode assembly in accordance with the second embodiment.

FIG. 11 is a schematic view of a fuel cell in accordance with the second embodiment.

FIG. 12 is a schematic view of a membrane electrode assembly in accordance with the third embodiment.

FIG. 13 is a schematic view of a biofuel cell in accordance with the third embodiment.

FIG. 14 is a flow chart of a method for making the membrane electrode assembly shown in FIG. 1, 10 and 12.

FIG 15 is a photograph of the pressing carbon nanotube film obtained by pressing an array of carbon nanotubes.

FIG 16 is a photograph of a carbon nanotube flocculent structure in accordance with the present embodiment.

FIG 17 is a photograph of a flocculent carbon nanotube film folded without rapture in accordance with the present embodiment.

FIG 18 is a Scanning Electron Microscope (SEM) image of the drawing carbon nanotube film deposited with metal particles.

Corresponding reference characters indicate corresponding parts throughout the several views. The exemplifications set out herein illustrate at least one present embodiment of the membrane electrode assembly and the method for making the same, in at least one form, and such exemplifications are not to be construed as limiting the scope of the invention in any manner.

### DETAILED DESCRIPTION OF EXEMPLARY EMBODIMENTS

References will now be made to the drawings, in detail, to describe embodiments of the membrane electrode assembly and the method for making the same.

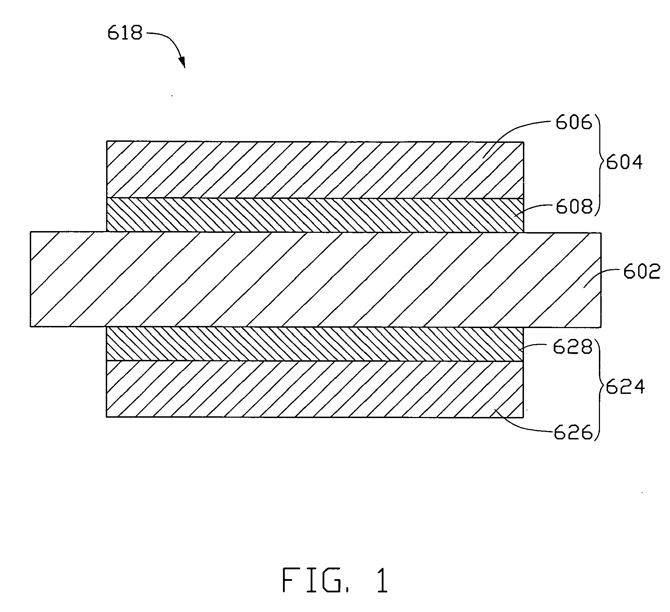

Referring to FIG 1, a membrane electrode assembly 618 is provided in the first embodiment. The membrane electrode assembly 618 includes a proton exchange membrane 602, an anode 604 and a cathode 624. The proton exchange membrane 602 has two opposite surfaces. The anode 604 and the cathode 624 are separately located on the two opposite surfaces of the proton exchange membrane 602. Furthermore, the anode 604 includes a first catalyst layer 608 and a first gas diffusion layer 606. The first catalyst layer 608 is between the first gas diffusion layer 606 and the proton exchange membrane 602. The cathode 624 includes a second catalyst layer 628 and a second gas diffusion layer 626. The second catalyst layer 628 is between the second gas diffusion layer 626 and the proton exchange membrane 602.

At least one of the first gas diffusion layer 606 and the second gas diffusion layer 626 includes a carbon nanotube structure. The carbon nanotube structure includes a plurality of carbon nanotubes distributed uniformly. A plurality of carbon nanotubes are arrayed orderly or disorderly in the carbon nanotube structure. The carbon nanotubes in the carbon nanotube structure can be selected from the group comprising single-walled carbon nanotubes, double-walled carbon nanotubes, and multi-walled carbon nanotubes. A diameter of each single-walled carbon nanotube approximately ranges from 0.5 to 50 nanometers. A diameter of each double-walled carbon nanotube approximately ranges from 1 to 50 nanometers. A diameter of each multi-walled carbon nanotube approximately ranges from 1.5 to 50 nanometers. A length of the carbon nanotubes is larger than 50 micrometers. A length of the carbon nanotubes ranges approximately from 200 micrometers to 900 micrometers in the first embodiment. The carbon nanotube structure can includes carbon nanotube films obtained by pulling an array of carbon nanotubes, twisted or untwisted carbon nanotube wires, carbon nanotube films obtained by pressing an array of carbon nanotubes, carbon nanotube films obtained by flocculent, or combination thereof.

The carbon nanotube structure includes at least one carbon nanotube layer. The carbon nanotube layers can be arranged side by side to form a coplanar layer, or can be overlapped or stacked with each other. Adjacent stacked carbon nanotube layers can combine to each other by van der Waals attractive force therebetween. Each carbon nanotube layer can include at least one carbon nanotube film, at least one carbon nanotube wire, or combinations thereof. A plurality of carbon nanotube wires can disposed side by side, disposed crossed, or waved together to form the carbon nanotube layer. A plurality of carbon nanotube films can be overlapped or stacked with each other to form the carbon nanotube layer, When the carbon nanotube structure includes carbon nanotube films and carbon nanotube wires, the carbon nanotube wires can be disposed on a surface of the carbon nanotube film.

The area and thickness of the carbon nanotube structure is unlimited and could be made according to user's specific needs. Various areas and thickness of carbon nanotube structures are obtained by placing one layer or at least two carbon nanotube layers side-by-side and/or stacking a plurality of carbon nanotube layers. The area of the carbon nanotube structure is determined by the number and size of carbon nanotube films/wires in each carbon nanotube layer. Additionally, the thickness of the carbon nanotube structure is determined by the number and thickness of carbon nanotube layers in the carbon nanotube structure.

The carbon nanotube film can be an ordered film or a disordered film. In this specification, the "disordered" means the align direction of the carbon nanotubes are random, thus, in the disordered carbon nanotube film, the numbers of the carbon nanotubes aligned in every directions in the film are equal. In this specification, the "ordered" means the align direction of at least the majority of the carbon nanotubes has a predetermined regulation (e.g., the carbon nanotubes are aligned substantially along one direction or several directions). In the disordered film, the carbon nanotubes are disordered or isotropic. The disordered carbon nanotubes entangle with each other The isotropic carbon nanotubes are substantially parallel to a surface of the carbon nanotube film. In the ordered film, the carbon nanotubes are primarily oriented along a same direction in each film and substantially parallel to a surface of the carbon nanotube film. Different straturns/layers of films can have the carbon nanotubes offset from the carbon nanotubes in other films. The carbon nanotube film can be a flocculent carbon nanotube film, a pressing carbon nanotube film, or a drawing carbon nanotube film.

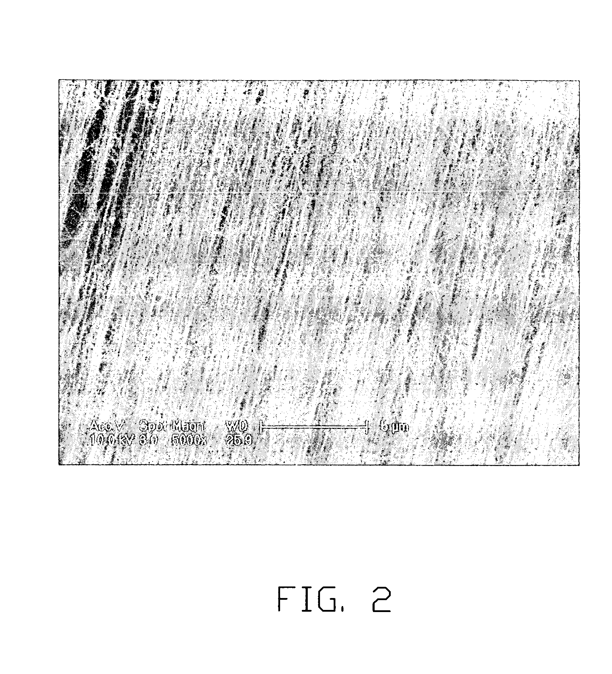

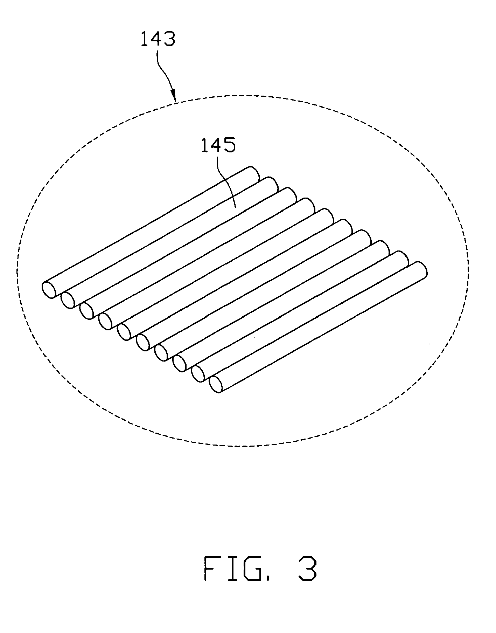

Referring to FIG. 2 the drawing carbon nanotube film includes a plurality of carbon nanotubes joined successively end-to-end by van der Waals attractive force therebetween. The "drawing" means the carbon nanotube film is drawn from a supper-aligned carbon nanotube array. The drawing carbon nanotube film can be a free-standing carbon nanotube film. Typically, the carbon nanotubes in each drawing carbon nanotube film are aligned substantially parallel to a same direction (i.e., the drawing carbon nanotube film is an ordered film). More specifically, referring to FIG. 3, the drawing carbon nanotube film comprises a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in the carbon nanotube segment 143 are also oriented along a preferred orientation. The thickness of the drawing carbon nanotube film approximately ranges from 0.5 nanometers to 100 micrometers. In the drawing carbon nanotube film, the majority of carbon nanotubes are arranged along a primary direction; however, the orientation of some of the nanotubes may vary. The aligned direction of the carbon nanotubes in any two adjacent drawing carbon nanotube films form an angle α, where 0 ≦ α≦ 90°. Thus, the carbon nanotube structure includes a plurality of micropores distributed in the carbon nanotube structure uniformly. Diameters of the micropores approximately range from 1 to 500 nanometers. The micropores can be used to diffuse the gas. It is to be understood that there can be some variation in the carbon nanotube structures.

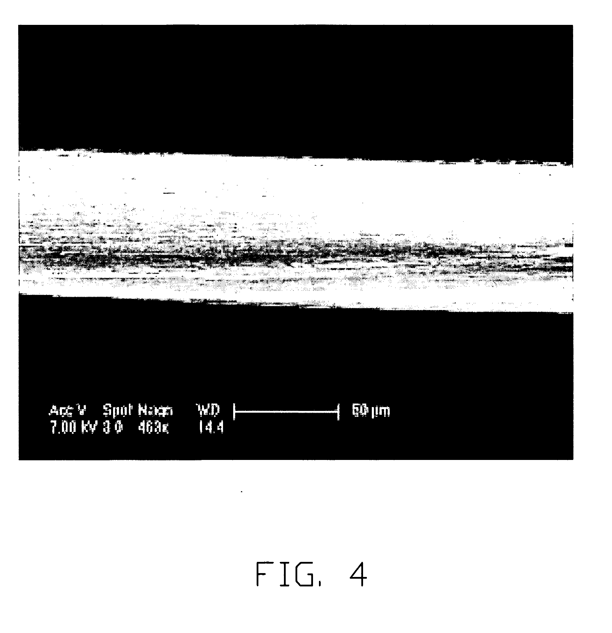

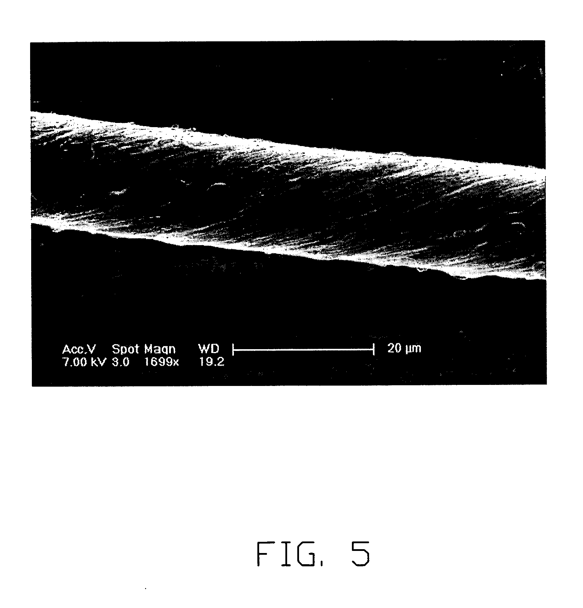

The carbon nanotube wire used can be twisted or untwisted. The untwisted carbon nanotube wire is also drawn from a carbon nanotube array. The twisted carbon nanotube wire is twisted to form the untwisted carbon nanotube wire or the carbon nanotube film. Referring to FIG. 4, the untwisted carbon nanotube wire can be composed of a plurality of successive carbon nanotubes joined end to end by van der Waals attractive force therebetween, and oriented along a same direction (i.e., a direction along the length of the wire). There are one or more carbon nanotubes in thickness of the untwisted carbon nanotube wire. Referring to FIG 5, the twisted carbon nanotube wire can be composed of a plurality of successive twist carbon nanotubes joined end to end by van der Waals attractive force therebetween, and oriented around an axial direction of the carbon nanotube wire. While the twisted carbon nanotube wire is twisted to form the disordered carbon nanotube film, the twisted carbon nanotube wire can be composed of a plurality of entangled carbon nanotubes.

Length of the twisted/untwisted carbon nanotube wire can be arbitrarily set as desired. A diameter of each carbon nanotube string is in an approximate range from 0.5 nanometers to 180 micrometers (µm). In the carbon nanotube layer, distances between adjacent carbon nanotube wires are in an approximate range from 10 nanometers to 10 microns. Micropores can be defined by adjacent crossed or waved carbon nanotube wires. A diameter of the micropores is less than about 10 micron. The micropores can be used to diffuse the gas.

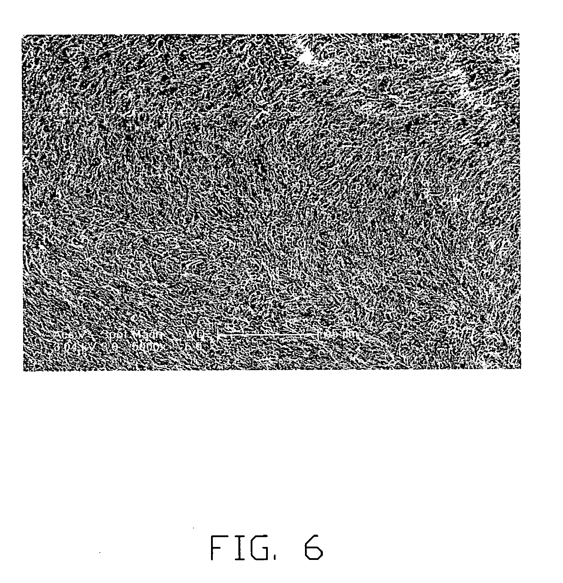

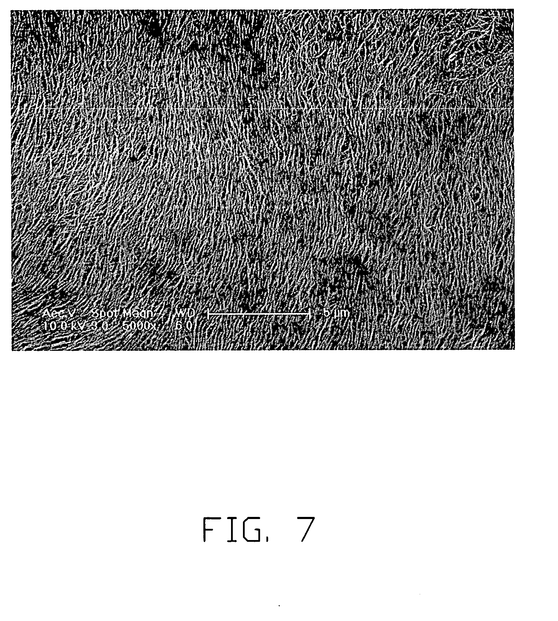

Referring to FIG. 6 and 7, the pressing carbon nanotube film can be a free-standing carbon nanotube film. The "pressing" carbon nanotube film means the carbon nanotube film is formed by a pressing a carbon nanotube array. The carbon nanotubes in the pressing carbon nanotube film are arranged isotropically, arranged along a same direction or arranged along different directions. An angle between a primary alignment direction of the carbon nanotubes in the carbon nanotube film and the carbon nanotube film is 0 **°** to approximately 15 ° when measured from the surface of the pressing carbon nanotube film. The pressing carbon nanotube film can be formed by pressing an array of carbon nanotubes. The angle is closely related to pressure applied to the array of carbon nanotubes. The greater the pressure, the smaller the angle. The carbon nanotubes in the carbon nanotube structure can parallel to the surface of the pressing carbon nanotube film when the angle is 0 °. A length and a width of the pressing carbon nanotube film can be arbitrarily set as desired. A thickness of the pressing carbon nanotube film is in an approximate range from 0.5 nanometers to 1 millimeter. The pressing carbon nanotube film includes a plurality of micropores. A diameter of the micropores is less than about 10 micron. The micropores can be used to diffuse the gas.

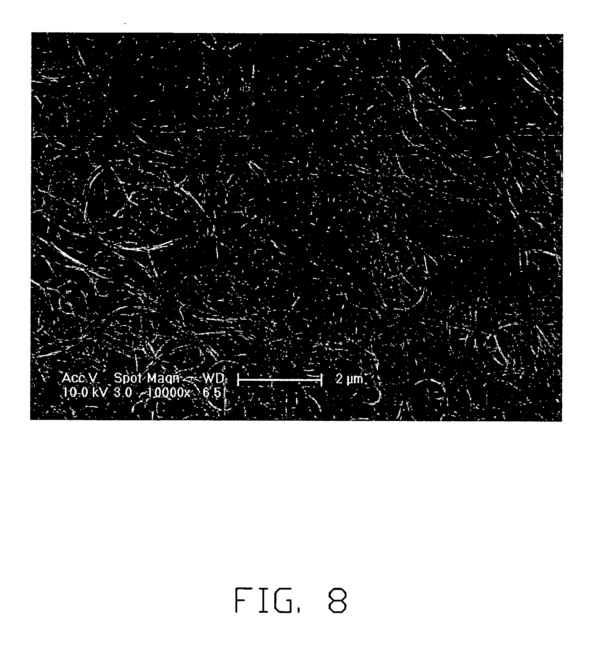

Referring to FIG 8, the flocculent carbon nanotube film includes a plurality of carbon nanotubes entangled with each other. The "flocculent" carbon nanotube film means the carbon nanotube film is formed by a flocculating method. The adjacent carbon nanotubes are combined and entangled by van der Waals attractive force therebetween, thereby forming an entangled structure/microporous structure. Further, the carbon nanotubes in the flocculent carbon nanotube film are isotropic. The flocculent carbon nanotube film includes a plurality of micropores defined by the disordered carbon nanotubes. Sizes of the micropores are less than 10 micrometers. The micropores can be used to diffuse the gas. Length and width of the flocculent carbon nanotube film are not limited. A thickness of the flocculent carbon nanotube layer approximately ranges from 0.5 nanometers to 1 millimeter.

The first catalyst layer 608 and the second catalyst layer 628 includes catalyst materials and carrier. The catalyst materials include metal particles or enzymatic catalyst. The metal particles can be selected from the group comprising platinum particles, gold particles, ruthenium particles and combination threreof. The enzymatic catalyst can be selected from the group comprising oxidase, dehydrogenase and combination threreof. The carrier can be selected from the group comprising graphite, carbon black, carbon fiber, and carbon nanotubes. The distribution of the metal particles is less than 0.5mg/cm² (milligram per square centimeter). The material of the proton exchange membrane 602 can be selected from the group comprising perfluorosulfonic acid, polystyrene sulfonic acid, polystyrene trifluoroacetic acid, phenol-formaldehyde resin acid, and hydrocarbons.

In the first embodiment, the metal particles are platinum; and the carrier is carbon nanotubes. The metal particles are dispersed in the carbon nanotubes, thereby forming the catalyst layer.

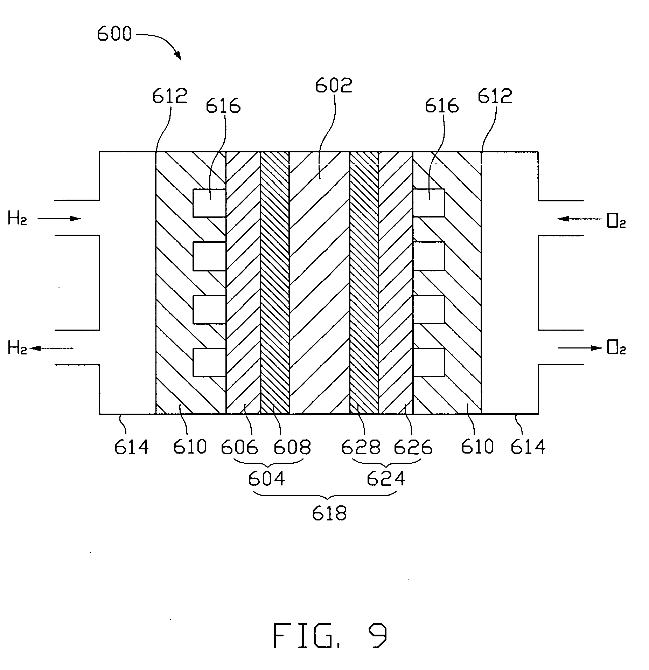

Referring to FIG. 9, a fuel cell 600 is further provided in the present embodiment. The fuel cell 600 includes a membrane electrode assembly (MEA) 618, two flow field plates (FFP) 610, two current collector plates (CCP) 612, as well as related support equipment 614. The FFP 610 is made of metals or conductive carbon materials. Each FFP 610 is located on a surface of each anode 604 or cathode 624 facing away from the proton exchange membrane 602. The FFP 610 has at least one flow field groove 616. The flow field groove 616 is contacted with the gas diffusion layer. Thus, the flow field groove 616 is used to transport the fuel gases, the oxidant gases, and the reaction product (i.e. water). The CCP 612 is made of conductive materials. Each CCP 612 is located on a surface of each FFP 610 facing away from the proton exchange membrane 602. Thus, the CCP 612 is used to collect and conduct the electrons in the work process of MEA 618. The related support equipments 614 include blowers, valves, and pipelines. The blower is connected with the flow field plate 610 via pipelines. The blowers blow the fuel gases and the oxidant gases.

In the working process of the fuel cell 600, fuel gases (e.g., hydrogen) and oxidant gases (e.g., pure oxygen or air containing oxygen) are applied to a surface of each electrode through the flow field plates 610 by the related equipments 614. Specifically, hydrogen is applied to an anode 604 and oxygen is applied to a cathode 624. In one side of the MEA 618, after the hydrogen has been applied to the first catalyst layer 608, a reaction of each hydrogen molecule is as follows: H₂→ 2H⁺+2e. The hydrogen ions generated by the above-described reaction reach the cathode through the proton exchange membrane 602. At the same time, the electrons generated by the reaction also arrive at the cathode 624 by an external electrical circuit. In the other side of the MEA 618, oxygen is also applied to the cathode 624. Thus, the oxygen reacts with the hydrogen ions and electrons as shown in the following equation: 1/2O₂+2H⁺+2e→ H₂O. In the electrochemical reaction process, the electrons form an electrical current, and as a result, are able to output electrical energy. Accordingly, the water generated by the reaction penetrates the gas diffusion layer and the flow field plate 610, thereby removing itself from the MEA 618. From the above-described process, it is known that the gas diffusion layer reacts as a channel for the fuel gases, oxidant gases, as well as the electrons. Fuel gas and oxidant gases from the gas diffusion layer arrive at the catalyst layer; and the electrons through the gas diffusion layer are connected to the external electrical circuit.

In the first embodiment, the gas diffusion layer includes the carbon nanotube structure. The carbon nanotube structure includes ordered or disordered carbon nanotubes. There are some overlaps between adjacent carbon nanotubes and form the micropores. Thus, the carbon nanotube structure includes a plurality of micropores distributed in the carbon nanotube structure uniformly and a large specific surface area. As such, on one side of MEA 618, the hydrogen can be effectively and uniformly diffused in the carbon nanotube structure, The hydrogen fully contacts with metal particles in the catalyst layer. Thus, the catalytic reaction activity of the metal particles with the hydrogen is enhanced. In another side of the MEA 618, the oxidant gases are also uniformly diffused to the catalyst layer through the carbon nanotube structure, thereby fully contacting with the metal particles of the catalyst layer. Thus, the catalytic reaction activity of the metal particles with the hydrogen ions and electrons is enhanced. Due to the carbon nanotube structure having good conductivity, the electrons needed or generated in the reactions are quickly conducted by the carbon nanotube structure.

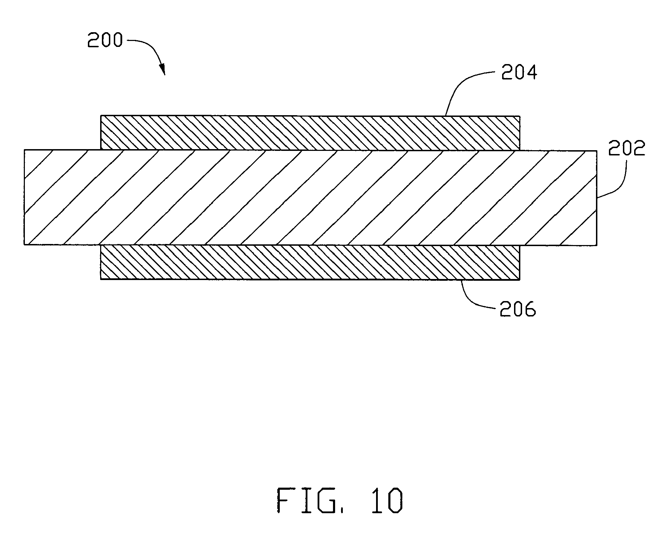

Referring to FIG 10, a membrane electrode assembly 200 is provided in the second embodiment. The membrane electrode assembly 200 includes a proton exchange membrane 202, an anode 204 and a cathode 206. The proton exchange membrane 202 has two opposite surfaces. The anode 204 and the cathode 206 are separately located on the two opposite surfaces of the proton exchange membrane 202. At least one of the anode 204 and the cathode 206 includes at least one carbon nanotube composite structure. The carbon nanotube composite structure includes a carbon nanotube structure and a plurality of catalyst materials distributed uniformly in the carbon nanotube structure.

The carbon nanotube structure in the second embodiment has the same structure with the carbon nanotube structure in the first embodiment. The carbon nanotube structure can includes carbon nanotube films obtained by pulling an array of carbon nanotubes, twisted or untwisted carbon nanotube wires, carbon nanotube films obtained by pressing an array of carbon nanotubes, carbon nanotube films obtained by flocculent, or combination thereof. The carbon nanotube structure can be used to diffuse gas.

In the second embodiment, the carbon nanotube structure includes a plurality of carbon nanotube wires. The carbon nanotube wire and the catalyst materials distributed in the carbon nanotube wire form a wire-shaped carbon nanotube composite structure.

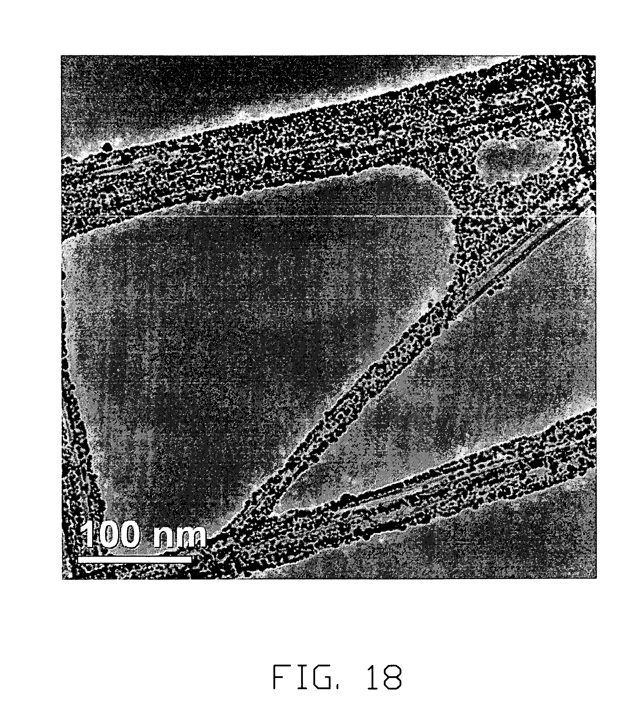

The catalyst materials include metal particles. The metal particles can be selected from the group comprising platinum particles, gold particles, ruthenium particles and combination threreof. A diameter of the metal particles ranges from approximately 1 to 10 nanometers. Referring FIG. 18, the metal particles are dispersed uniformly on the surface of the carbon nanotubes in the carbon nanotube structure. The distribution of the metal particles is less than 0.5mg/cm² (milligram per square centimeter). In the second embodiment, the metal particles are platinum.

The carbon nanotube composite structure is fixed on the surface of the proton exchange membrane 202 by adhesive agent or a heat pressing process. While the anode 204 or cathode 206 includes a plurality of wire-shaped carbon nanotube composite structures, the wire-shaped carbon nanotube composite structures are located on the surface of the proton exchange membrane 202 in parallel or crossed or waved. The adjacent wire-shaped carbon nanotube composite structures may be in contact with each other or be separated by a distance of up to 1 micrometer. A plurality of micropores are formed and distributed uniformly in the anode 204 or cathode 206, while a plurality of wire-shaped carbon nanotube composite structures are located in parallel, crossed, or waved. A diameter of the micropore is less than 1 micrometer.

While one of the anode 204 and the cathode 206 includes at least one carbon nanotube composite structure, the other electrode is arbitrary. The other electrode can include a gas diffusion layer and a catalyst layer disposed thereon. The catalyst layer is disposed between the proton exchange membrane 202 and the gas diffusion layer. The gas diffusion layer can be a carbon fiber paper or a carbon nanotube structure. The catalyst layer includes catalyst materials and carrier. The catalyst materials include metal particles or enzymatic catalyst. The metal particles can be selected from the group comprising platinum particles, gold particles, ruthenium particles and combination threreof. The enzymatic catalyst can be selected from the group comprising oxidase, dehydrogenase and combination threreof. The carrier can be selected from the group comprising graphite, carbon black, carbon fiber, and carbon nanotubes. In the second embodiment, both the anode 204 and the cathode 206 include a plurality of wire-shaped carbon nanotube composite structures. The wire-shaped carbon nanotube composite structures are disposed parallel and in contact with each other on the surface of the proton exchange membrane 202. It is to be understood that the anode 204 and the cathode 206 have the same structure in the second embodiment, so the anode 204 and the cathode 206 can be transformed.

The material of the proton exchange membrane 202 can be selected from the group consisting of perfluorosulfonic acid, polystyrene sulfonic acid, polystyrene trifluoroacetic acid, phenol-formaldehyde resin acid, and hydrocarbons.

The membrane electrode assembly 200 in the second embodiment has following advantages. Firstly, both the anode 204 and the cathode 206 include a plurality of wire-shaped carbon nanotube composite structures including a carbon nanotube wire and catalyst distributed therein. Thus the catalyst layer and the diffusion layer are formed into a uniform structure to avoid the contact resistance between the diffusion layer and catalyst layer. So the electrons could transfer fast in the anode 204 or the cathode 206. Thus, the catalytic reaction activity of the metal particles with the hydrogen ions and electrons is enhanced. Secondly, the carbon nanotube in the carbon nanotube composite structures has large specific surface area and the catalyst are dispersed uniformly in the surface of the carbon nanotubes, so the fuel gases and oxidant gases has more chance to contact with the catalyst. Therefore, it can make use of the catalyst effectively. Thirdly, due to the carbon nanotube wire having good conductivity, the electrons needed or generated in the reactions are quickly conducted by the carbon nanotube wire.

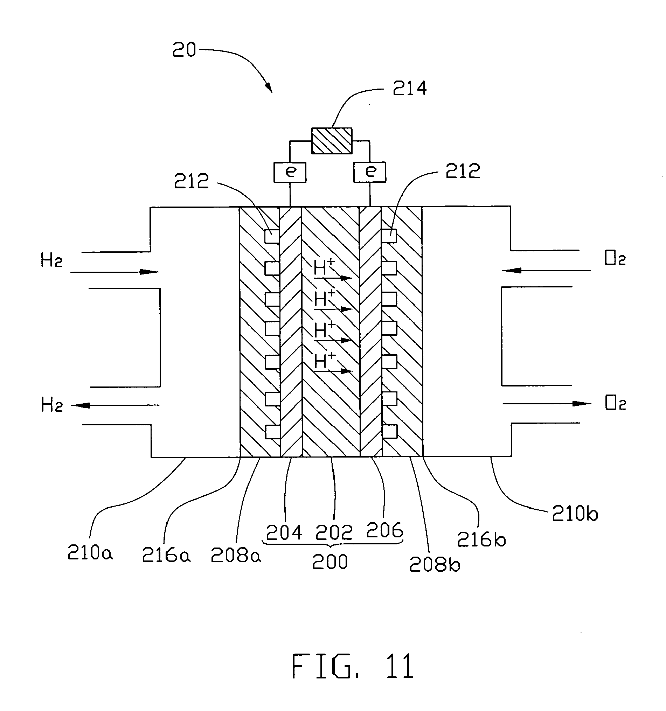

Referring to FIG. 11, a fuel cell 20 is further provided in the second embodiment. The fuel cell 20 includes a membrane electrode assembly (MEA) 200, a first flow field plates (FFP) 208a, a second flow field plates (FFP) 208b, a first current collector plates (CCP) 216a, a second current collector plates (CCP) 216b, as well as a first support equipment 210an and a second support equipment 210b.

The MEA 200 is the MEA 200 described in the second embodiment. Both the anode 204 and the cathode 206 include a plurality of wire-shaped carbon nanotube composite structures. The wire-shaped carbon nanotube composite structures are disposed parallel and in contact with each other on the surface of the proton exchange membrane 202.

Both the first FFP 208an and the second FFP 208b have at least one flow field groove 212. The flow field groove 212 is contacted with the anode 204 or the cathode 206. Thus, the flow field groove 212 is used to transport the fuel gases, the oxidant gases, and the reaction product (i.e. water). The first FFP 208an and the second FFP 208b are made of metal or conductive carbon materials.

Both the first CCP 216a and the second CCP 216b are made of conductive materials. The first CCP 216a and the second CCP 216b are located on a surface of each FFP facing away from the proton exchange membrane 202. Thus, the CCP is used to collect and conduct the electrons in the work process of MEA 200. The first CCP 216an and the second CCP 216b are optional because the linear carbon nanotube composite structures are conductive.

The related support equipments include blowers, valves, and pipelines. The blower is connected with the flow field plate via pipelines. The blowers blow the fuel gases and the oxidant gases.

In the working process of the fuel cell 20, fuel gases (i.e. hydrogen) and oxidant gases (i.e. pure oxygen or air containing oxygen) are applied to a surface of each electrode through the flow field plates by the support equipments. Specifically, hydrogen is applied to an anode 204 and oxygen is applied to a cathode 206. In one side of the MEA 200, after the hydrogen has been applied to the catalyst materials in the carbon nanotube structure, a reaction of each hydrogen molecule is as follows: H₂→ 2H⁺+2e. The hydrogen ions generated by the above-described reaction reach the cathode 206 through the proton exchange membrane 202. At the same time, the electrons generated by the reaction also arrive at the cathode 206 by an external electrical circuit. In the other side of the MEA 200, oxygen is also applied to the cathode 206. Thus, the oxygen reacts with the hydrogen ions and electrons as shown in the following equation: 1/2O₂+2H⁺+2e→ H₂O. In the electrochemical reaction process, the electrons form an electrical current, and as a result, are able to output electrical energy to a load 214 in the external electrical circuit.

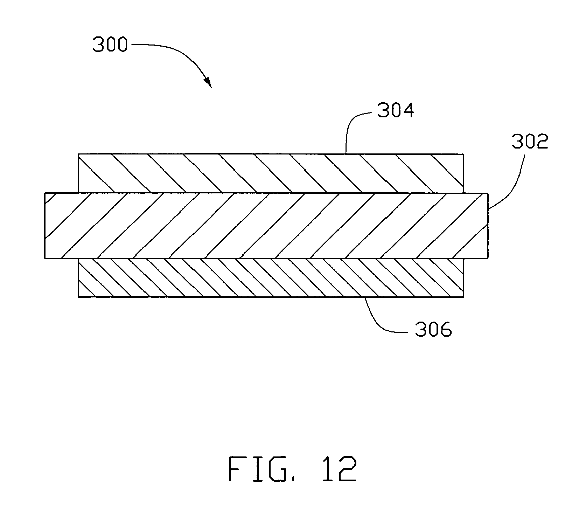

Referring to FIG. 12, a membrane electrode assembly 300 is provided in the third embodiment. The structure of the membrane electrode assembly 300 in the third embodiment is similar to the structure of membrane electrode assembly 200 in the second embodiment. The membrane electrode assembly 300 includes a proton exchange membrane 302, an anode 304 and a cathode 306. The proton exchange membrane 302 has two opposite surfaces. The anode 304 and the cathode 306 are separately located on the two opposite surfaces of the proton exchange membrane 302. The anode 304 includes at least one carbon nanotube composite structure. The carbon nanotube composite structure includes a carbon nanotube structure and a plurality of enzymatic catalyst materials distributed uniformly in the carbon nanotube structure.

The carbon nanotube structure in the third embodiment has the same structure with the carbon nanotube structure in the first embodiment. The carbon nanotube structure can includes carbon nanotube films obtained by pulling an array of carbon nanotubes, twisted or untwisted carbon nanotube wires, carbon nanotube films obtained by pressing an array of carbon nanotubes, carbon nanotube films obtained by flocculent, or combination thereof. The carbon nanotube structure includes a plurality of carbon nanotubes. Each carbon nanotube includes a plurality of functional group. The functional group is selected from the group comprising carboxyl, hydroxyl, and combination there of. In the third embodiment, the carbon nanotube structure includes a plurality of carbon nanotube wires. The carbon nanotube wire and the enzymatic catalyst materials distributed in the carbon nanotube wire form a wire-shaped carbon nanotube composite structure. The carbon nanotube structure can be used to diffuse gas.

The enzymatic catalyst can be selected from the group comprising oxidase, dehydrogenase and combination threreof. The enzymatic catalyst is dispersed on the surface of the carbon nanotubes. The enzymatic catalyst is attached on the surface of the carbon nanotubes via the carboxyl or hydroxyl. In the third embodiment, the enzymatic catalyst is glucose oxidase.

The carbon nanotube composite structure is fixed on the surface of the proton exchange membrane 302 by adhesive agent or a heat pressing process. While the anode 304 includes a plurality of wire-shaped carbon nanotube composite structures, the wire-shaped carbon nanotube composite structures are located on the surface of the proton exchange membrane 202 in parallel or crossed. The adjacent wire-shaped carbon nanotube composite structures may be in contact with each other or be separated by a distance of up to 1 micrometer. A plurality of micropores are formed and distributed uniformly in the anode 304 while a plurality of wire-shaped carbon nanotube composite structures are located in parallel or crossed. A diameter of the micropore is less than 1 micrometer.

While the anode 304 includes at least one carbon nanotube composite structure, the cathode 306 is arbitrary. The cathode 306 can include a gas diffusion layer and a catalyst layer disposed thereon. The catalyst layer is disposed between the proton exchange membrane 302 and the gas diffusion layer. The gas diffusion layer can be a carbon fiber paper or a carbon nanotube structure. The catalyst layer includes catalyst materials and carrier. The catalyst materials include metal particles. The metal particles are selected from the group comprising platinum particles, gold particles, ruthenium particles and combination threreof. The carrier is selected from the group comprising graphite, carbon black, carbon fiber, and carbon nanotubes. In the third embodiment, the cathode 306 includes a plurality of wire-shaped carbon nanotube composite structures. The wire-shaped carbon nanotube composite structure includes a carbon nanotube wire and platinum particles distributed in the carbon nanotube wire. The wire-shaped carbon nanotube composite structures are disposed parallel and in contact with each other on the surface of the proton exchange membrane 302.

The material of the proton exchange membrane 302 is selected from the group consisting of perfluorosulfonic acid, polystyrene sulfonic acid, polystyrene trifluoroacetic acid, phenol-formaldehyde resin acid, and hydrocarbons.

The membrane electrode assembly 300 in the third embodiment has following advantages. Firstly, the anode 304 include a plurality of wire-shaped carbon nanotube composite structures of a carbon nanotube string and enzymatic catalyst distributed therein, the cathode 306 include a plurality of wire-shaped carbon nanotube composite structures of a carbon nanotube wire and metal particles distributed therein, thus avoid the contact resistance between the diffusion layer and catalyst layer. So the electrons could transfer fast in the anode 304 or the cathode 306. Thus, the catalytic reaction activity of the metal particles with the hydrogen ions and electrons is enhanced. Secondly, the carbon nanotube in the carbon nanotube composite structures has large specific surface area and the catalyst are dispersed uniformly in the surface of the carbon nanotubes, so the biofuel and oxidant gases has more chance to contact with the catalyst. Therefore, it can make use of the catalyst effectively. Thirdly, due to the carbon nanotube wire having good conductivity, the electrons needed or generated in the reactions are quickly conducted by the carbon nanotube wire.

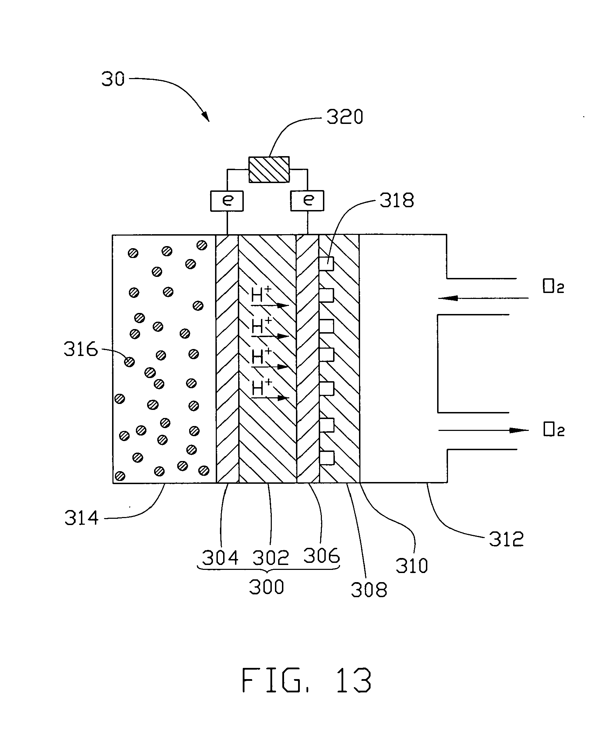

Referring to FIG. 13, a biofuel cell 30 is further provided in the third embodiment. The biofuel cell 30 includes a membrane electrode assembly (MEA) 300, an anode container 314, a flow field plates (FFP) 308, a current collector plates (CCP) 310, as well as a support equipment 312.

The MEA 300 is the MEA 300 described in the third embodiment. The anode 304 includes a plurality of wire-shaped carbon nanotube composite structures of carbon nanotube strings and enzymatic catalyst. The cathode 306 includes a plurality of wire-shaped carbon nanotube composite structures of carbon nanotube wire and metal particles catalyst. The wire-shaped carbon nanotube composite structures are disposed parallel and in contact with each other on the surface of the proton exchange membrane 202.

The anode container 314 is located on the side of the anode 304 of the MEA 300 and used to load biofuel 316. In the third embodiment, the biofuel 316 is glucose. The anode 304 is immerged in the biofuel 316 so that the enzymatic catalyst could contact with the biofuel 316. The MEA 300 separates the biofuel 316 and the oxidant gases.

The FFP 308 is located on the side of the cathode 306 of the MEA 300. The FFP 308 has at least one flow field groove 318. The flow field groove 318 is contacted with the cathode 306. Thus, the flow field groove 318 is used to transport the oxidant gases, and the reaction product (i.e. water). The FFP 308 is made of metal or conductive carbon materials.

The CCP 310 is located on a surface of the FFP 308 facing away from the proton exchange membrane 302. The CCP 310 is made of conductive materials. Thus, the CCP 310 is used to collect and conduct the electrons in the work process of MEA 300. The CCP 310 is optional because the linear carbon nanotube composite structures are conductive.

The related support equipments 312 include blowers, valves, and pipelines. The blower is connected with the flow field plate 308 via pipelines. The blowers blow the oxidant gases.

In the working process of the biofuel cell 30, a reaction of each glucose molecule is as follows: glucose → gluconic acid+2H⁺+2e in on side of the MEA 300. The hydrogen ions generated by the above-described reaction reach the cathode 306 through the proton exchange membrane 302. At the same time, the electrons generated by the reaction also arrive at the cathode 306 by an external electrical circuit. In the other side of the MEA 300, oxygen is applied to the cathode 306. Thus, the oxygen reacts with the hydrogen ions and electrons as shown in the following equation: 1/2O₂+2H⁺+2e→ H₂O. In the electrochemical reaction process, the electrons form an electrical current, and as a result, are able to output electrical energy to a load 320 in the external electrical circuit.

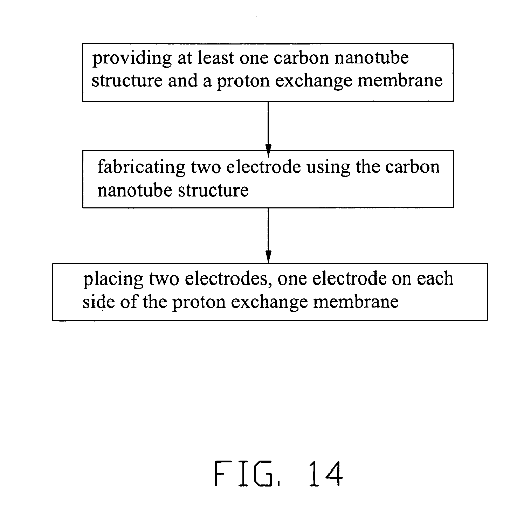

Referring to FIG 14, a method for making the membrane electrode assembly is provided in the present embodiment. The method includes the steps of: (a) providing at least one carbon nanotube structure and a proton exchange membrane; (b) fabricating at least one electrode using the carbon nanotube structure; and (c) placing two of the electrodes, each electrode on one surfaces of the proton exchange membrane, thereby forming the membrane electrode assembly.

When the carbon nanotube structure includes the drawing carbon nanotube film, in step (a), the providing at least one carbon nanotube structure can include the substeps of: (a1) providing an array of carbon nanotubes; (a2) pulling out at least one drawing carbon nanotube film from the array of carbon nanotubes by using a tool (e.g., adhesive tape, pliers, tweezers, or another tool allowing multiple carbon nanotubes to be gripped and pulled simultaneously); (a3) forming a carbon nanotube structure with the drawing carbon nanotube films.

In step (a1), a given super-aligned array of carbon nanotubes can be formed by the substeps of (a11) providing a substantially flat and smooth substrate; (a12) forming a catalyst layer on the substrate; (a13) annealing the substrate with the catalyst layer in air at a temperature approximately ranging from 700°C to 900°C for about 30 to 90 minutes; (a14) heating the substrate with the catalyst layer to a temperature approximately ranging from 500°C to 740°C in a furnace with a protective gas therein; and (a15) supplying a carbon source gas to the furnace for about 5 to 30 minutes and growing the super-aligned array of carbon nanotubes on the substrate.

In step (a11), the substrate can be a P-type silicon wafer, an N-type silicon wafer, or a silicon wafer with a film of silicon dioxide thereon. A 4-inch P-type silicon wafer is used as the substrate.

In step (a12), the catalyst can be made of iron (Fe), cobalt (Co), nickel (Ni), or any alloy thereof.

In step (a14), the protective gas can be made up of at least one of nitrogen (N₂), ammonia (NH₃), and a noble gas. In step (a15), the carbon source gas can be a hydrocarbon gas, such as ethylene (C₂H₄), methane (CH₄), acetylene (C₂H₂), ethane (C₂H₆), or any combination thereof.

The super-aligned array of carbon nanotubes can be approximately 50 microns to 5 millimeters in height, with the super-aligned array including a plurality of carbon nanotubes parallel to each other and approximately perpendicular to the substrate. The carbon nanotubes in the carbon nanotube film can be selected from the group comprising single-walled carbon nanotubes, double-walled carbon nanotubes, and multi-walled carbon nanotubes. A diameter of each single-walled carbon nanotube approximately ranges from 0.5 to 50 nanometers. A diameter of each double-walled carbon nanotube approximately ranges from 1 to 50 nanometers. A diameter of each multi-walled carbon nanotube approximately ranges from 1.5 to 50 nanometers.

The super-aligned array of carbon nanotubes formed under the above conditions is essentially free of impurities, such as carbonaceous or residual catalyst particles. The carbon nanotubes in the super-aligned array are closely packed together by van der Waals attractive force.

In step (a2), the carbon nanotube film can be formed by the substeps of: (a21) selecting one or more of carbon nanotubes in a predetermined width from the super-aligned array of carbon nanotubes; and (a22) pulling the carbon nanotubes to form nanotube segments at an even/uniform speed to achieve a uniform carbon nanotube film.

In step (a21), the carbon nanotubes having a predetermined width can be selected by using an adhesive tape, such as the tool, to contact the super-aligned array. In step (a22), the pulling direction is substantially perpendicular to the growing direction of the super-aligned array of carbon nanotubes. Each carbon nanotube segment includes a plurality of carbon nanotubes parallel to each other.

More specifically, during the pulling process, as the initial carbon nanotube segments are drawn out, other carbon nanotube segments are also drawn out end-to-end due to van der Waals attractive force between ends of adjacent segments. This process of drawing helps provide a continuous and uniform carbon nanotube film having a predetermined width can be formed. Referring to FIG. 2, the carbon nanotube film includes a plurality of carbon nanotubes joined ends to ends. The drawing carbon nanotube film includes a plurality of carbon nanotube segments containing a plurality of carbon nanotubes. The carbon nanotubes in the carbon nanotube film are all substantially parallel to the pulling/drawing direction of the carbon nanotube film, and the drawing carbon nanotube film produced in such manner can be selectively formed to have a predetermined width, The drawing carbon nanotube film formed by the pulling/drawing method has a superior uniformity of thickness and conductivity over a typically disordered carbon nanotube film. Furthermore, the pulling/drawing method is simple, fast, and suitable for industrial applications.

The width of the drawing carbon nanotube film depends on a size of the array of carbon nanotubes. The length of the carbon nanotube film can be arbitrarily set as desired. In one useful embodiment, when the substrate is a 4-inch P-type silicon wafer, the width of the carbon nanotube film approximately ranges from 0.01 to 10 centimeters, while the thickness of the carbon nanotube film approximately ranges from 0.5 nanometers to 100 micrometers.

In step (a3), the step of forming a carbon nanotube structure includes the substeps of: (a31) providing a substrate having a surface; (a32) attaching at least one drawing carbon nanotube film onto the surface of the substrate; (a33) removing the unwanted drawing carbon nanotube film; and (a34) removing the substrate to obtain the carbon nanotube structure. In the present embodiment, the carbon nanotube film structure is obtained by placing at least two drawing carbon nanotube films side-by-side and/or overlapping adjacent drawing carbon nanotube films. At least two drawing carbon nanotube films are located side-by-side form a carbon nanotube layer. It is to be understood in other embodiments that the carbon nanotube layer can comprise of multiple films with at least one drawing nanotube films stacked upon another nanotube film. The carbon nanotube structure, of the present embodiment, includes at least two stacking carbon nanotube layers. The alignment of the carbon nanotubes in any two adjacent carbon nanotube layers form an angle α, and 0≦ α≦ 90°. The angle α is 90° in the present embodiment. After step (a34), a process of cutting the carbon nanotube structure is provided to form a predetermined size and various shapes of the gas diffusion layer.

The area of the substrate can be chosen according to the user-specific needs. The substrate can also be replaced with a frame. Because the carbon nanotubes in the superaligned array of carbon nanotubes have a high purity and a high specific surface area, the drawing carbon nanotube film is adherent in nature. As such, the drawing carbon nanotube film can be directly adhered to the substrate or frame. The unwanted drawing carbon nanotube film can be removed.

A step of treating the carbon nanotube structure with an organic solvent is optional after step (a3). The organic solvent is volatilizable and can be selected from the group comprising ethanol, methanol, acetone, dichloroethane, chloroform, and any appropriate mixture thereof. In the present embodiment, the organic solvent is ethanol. Specifically, the carbon nanotube structure can be treated through dripping organic solvent onto the surface of the carbon nanotube structure or soaking the entire carbon nanotube structure in an organic solvent After being soaked by the organic solvent, microscopically, carbon nanotube strings will be formed by some adjacent carbon nanotubes bundling together, due to the surface tension of the organic solvent. In one aspect, due to the decrease of the specific surface area via bundling, the mechanical strength and toughness of the carbon nanotube film are increased and the coefficient of friction of the drawing carbon nanotube films is reduced.

It is to be understood that a carbon nanotube yam can be drawn from the carbon nanotube array with a similar step of step (a2), by selecting carbon nanotubes with a relatively small width. Microscopically, the carbon nanotube yarn has a same structure with the drawing carbon nanotube film including carbon nanotube segments joined end to end by the van der Waals attractive force. Macroscopically, the width of the carbon nanotube yarn is much smaller than the drawing carbon nanotube film. At least one drawing carbon nanotube film or carbon nanotube yarn can be obtained. Then the twisted carbon nanotube wire can be obtained by twisting the drawing carbon nanotube film or carbon nanotube yarn. The untwisted carbon nanotube wire can be obtained by treating the carbon nanotube yam or the relatively small width drawing carbon nanotube film with the organic solvent. The carbon nanotube structure can be formed by disposing a plurality of carbon nanotube wires in parallel, crossed, or waved. Also, the carbon nanotube structure can be formed by circumvoluting a long carbon nanotube wire.

When the carbon nanotube structure includes the pressing carbon nanotube film, in step (a), the providing at least one carbon nanotube structure can include the substeps of: (a1') providing an array of carbon nanotubes; and (a2') providing a pressing device to press the array of carbon nanotubes, thereby forming a carbon nanotube structure.

In step (a1'), the array of carbon nanotubes is super-aligned array of carbon nanotubes and formed by above-described step (a1)

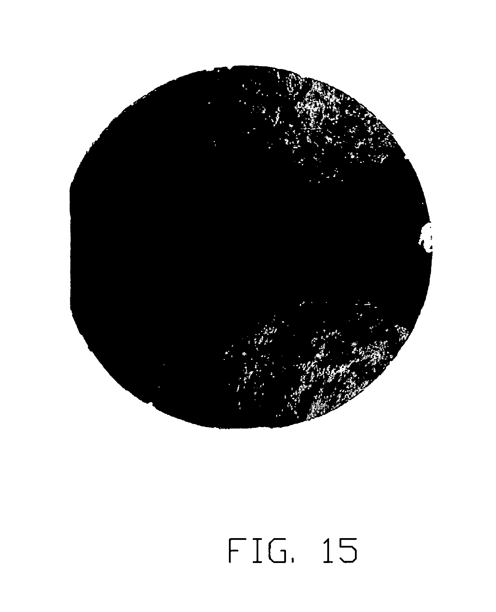

In step (a2'), a certain pressure can be applied to the array of carbon nanotubes by the pressing device. In the process of pressing, the carbon nanotubes in the array of carbon nanotubes form the carbon nanotube film under pressure. The carbon nanotubes can be nearly all parallel to a surface of the carbon nanotube film. Referring to FIG 15, a macrostructure photograph of the carbon nanotube film produced in the present embodiment is provided. The carbon nanotube film is circular with a diameter of about 10 centimeters.

In the present embodiment, the pressing device can be a pressure head. The pressure head has a glossy surface. It is to be understood that, the shape of the pressure head and the pressing direction can, opportunely, determine the direction of the carbon nanotubes arranged therein. Specifically, referring to FIG 6, when a planar pressure head is used to press the array of carbon nanotubes along the direction perpendicular to the substrate, a pressing carbon nanotube film having a plurality of carbon nanotubes isotropically arranged can, be obtained. Referring to FIG. 7, when a roller-shaped pressure head is used to press the array of carbon nanotubes along a fixed direction, a pressing carbon nanotube film having a plurality of carbon nanotubes aligned along the fixed direction is obtained. When a roller-shaped pressure head is used to press the array of carbon nanotubes along different directions, a pressing carbon nanotube film having a plurality of carbon nanotubes aligned along different directions is obtained.

Understandably, in the process of pressing, the carbon nanotubes will, slant, thereby forming a pressing carbon nanotube film having a free-standing structure. The carbon nanotubes in the free-standing structure are nearly all parallel to a surface of the pressing carbon nanotube film, and are isotropically arranged, arranged along a fixed direction, or arranged along different directions.

It is to be understood that, a degree of the slant of the carbon nanotubes in the pressing carbon nanotube film is related to the pressure. The greater the pressure, the greater the degree of slant. A thickness of the pressing carbon nanotube film is opportunely determined by the height of the array of carbon nanotubes and the pressure. That is, the higher the height of the array of carbon nanotubes and the less the pressure, the larger the thickness of the pressing carbon nanotube film. The pressing carbon nanotube film is free-standing, so it can be used as a carbon nanotube structure.

Understandably, in the present embodiment, the pressing carbon nanotube film is obtained by pressing a pressing device on an array of carbon nanotubes. Due to the array of carbon nanotubes having a plurality of carbon nanotubes uniformly dispersed, the carbon nanotube film includes a plurality of carbon nanotubes uniformly dispersed, and has good mechanical strength and tensile strength, thereby easy to process. Thus, the pressing carbon nanotube film can be cut into most any desired shape. It can be applied to use in the fuel cell, especially, the micro-type fuel cell as a gas diffusion layer.

When the carbon nanotube structure includes the flocculent carbon nanotube film, in step (a), the providing at least one carbon nanotube structure can include the substeps of: (a1") providing a raw material of carbon nanotubes; (a2") adding the raw material of carbon nanotubes to a solvent to get a flocculent structure; and (a3") separating the flocculent structure from the solvent, and shaping/molding the separated flocculent structure to obtain a carbon nanotube structure.

In step (a1"), the raw material of carbon nanotubes can be made by Chemical Vapor Deposition (CVD), Laser Ablation, or Arc-Charge. In the present embodiment, a raw material of carbon nanotubes is an array of carbon nanotubes, quite suitably, a super-aligned array of carbon nanotubes. The array of carbon nanotubes is formed by a similar method as the above-described step (a1). The array of carbon nanotubes is scraped from the substrate by a knife or other similar devices to obtain the raw material of carbon nanotubes. Such a raw material is, to a certain degree, able to maintain the bundled state of the carbon nanotubes.

In step (a2"), the solvent can be selected from the group consisting of water and volatile organic solvent. After adding the raw material of carbon nanotubes to the solvent, a process of flocculent is executed to get the flocculent structure. The process of flocculent can be selected from the group consisting of ultrasonic dispersion and high-strength agitating/vibrating. In this embodiment ultrasonic dispersion is used to flocculate the solvent containing the carbon nanotubes for about 10∼30 minutes. Due to the carbon nanotubes in the solvent having a large specific surface area and the bundled carbon nanotubes having a large van der Waals attractive force, the flocculated and bundled carbon nanotubes form a network structure (i.e., flocculent structure).

In step (a3"), the process of separating the flocculent structure from the solvent includes the substeps of: (a31") pouring the solvent containing the flocculent structure through a filter into a funnel; and (a32") drying the flocculent structure on the filter to obtain the separated flocculent structure of carbon nanotubes.

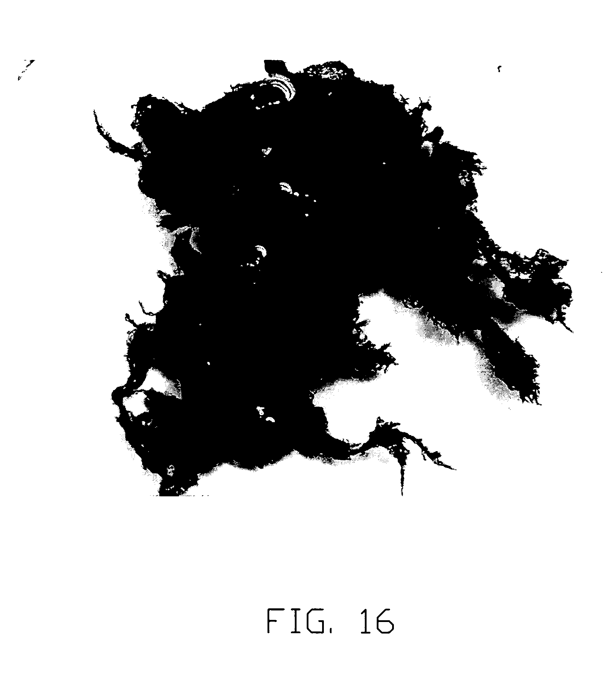

In step (a32"), a time of drying can be selected according to practical needs. Referring to FIG 16, the flocculent structure of carbon nanotubes on the filter is bundled together, so as to form an irregular flocculate structure.

In step (a3"), the process of shaping/molding includes the substeps of: (a33") putting the separated flocculent structure into a container (not shown), and spreading the flocculent structure to form a predetermined structure; (a34") pressing the spread flocculent structure with a certain pressure to yield a desirable shape; and (a35") drying the spread flocculent structure to remove the residual solvent or volatilizing the residual solvent to form a flocculent carbon nanotube film.

It is to be understood that the size of the spread flocculent structure can be used to control a thickness and a surface density of the flocculent carbon nanotube film. As such, the larger the area of a given amount of the flocculent structure is spread over, the less the thickness and density of the flocculent carbon nanotube film.

The carbon nanotubes in the flocculent carbon nanotube film entangled to each other provides strength to the carbon nanotube film, Therefore, the flocculent carbon nanotube film is easy to be folded and/or bent into arbitrary shapes without rupture. In the embodiment, the thickness of the flocculent carbon nanotube film is in the approximate range from 1 micrometer to 2 millimeters, and the width of the flocculent carbon nanotube film is in the approximate range from 1 millimeter to 10 centimeters.

Further, the step (a3") can be accomplished by a process of pumping filtration to obtain the carbon nanotube film. The process of pumping filtration includes the substeps of: (a36") providing a microporous membrane and an air-pumping funnel; (a37") filtering the solvent containing the flocculent structure of carbon nanotubes through the microporous membrane into the air-pumping funnel; and (a38") air-pumping and drying the flocculent structure of carbon nanotubes captured on the microporous membrane.

In step (a36"), the microporous membrane has a smooth surface. And the diameters of micropores in the membrane are about 0.22 microns. The pumping filtration can exert air pressure on the flocculent structure, thus, forming an uniform flocculent carbon nanotube film. Moreover, due to the microporous membrane having a smooth surface, the flocculent carbon nanotube film can be easily separated from the membrane.

The flocculent carbon nanotube film produced by the method has the following virtues. Firstly, through flocculent, the carbon nanotubes are bundled together by van der Walls attractive force to form a network structure/flocculent structure. Thus, the flocculent carbon nanotube film is very durable. Secondly, the flocculent carbon nanotube film is very simply and efficiently produced by the method. A result of the production process of the method, is that thickness and surface density of the flocculent carbon nanotube film are controllable.

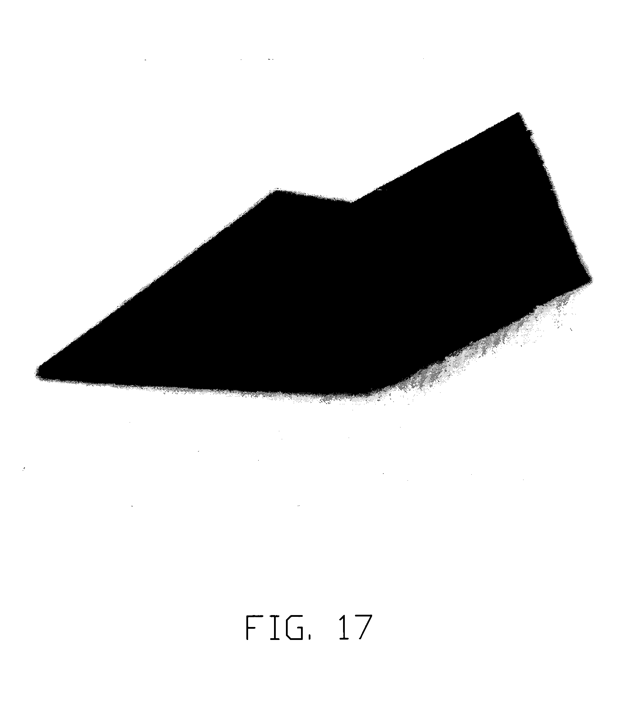

The adjacent carbon nanotubes are combined and tangled by van der Waals attractive force, thereby forming a network structure/microporous structure. Thus, the flocculent carbon nanotube film has good tensile strength. Referring to FIG. 17, the flocculent carbon nanotube film obtained in the present embodiment is folded without rapture. As such, the flocculent carbon nanotube film is easy to process, and can be folded in most any desired shape. The flocculent carbon nanotube film is free-standing, so it can be used as a carbon nanotube structure.

In practical use, the flocculent carbon nanotube film can be cut into any desired shape and size. As such, it is easily applied to use in a fuel cell, especially, in a micro-type of fuel cell acting as a gas diffusion layer.

In step (b), the electrode can be formed by forming a catalyst layer on the surface of the carbon nanotube structure or immerging the carbon nanotube structure into a catalyst-containing solution to obtain a carbon nanotube composite structure.

The process of forming a catalyst layer on the surface of the carbon nanotube structure includes the substeps of: (b1) putting metal particles and carbon particles into a dispersion solution; (b2) adding water and an active surface agent to the dispersion solution to obtain a catalyst slurry; (b3) coating the catalyst slurry on the gas diffusion layer and drying the catalyst slurry, thereby forming the catalyst layer on the carbon nanotube structure to obtain the electrode.

In step (b1), the metal particles are selected from the group comprising platinum particles, gold particles ruthenium particles and combination threreof. The carbon particles are selected from the group comprising graphite, carbon black, carbon fibers, and carbon nanotubes. The metal particles load on surfaces of the carbon particles. Furthermore, distribution of the metal particles is less than 0.5mg/cm². The carbon particles have the properties of high conductivity, a high specific surface area, and good corrosion resistance. In order to enhance the dispersion of carbon particles in the dispersion solution, a ball mill refiner is used to mill the carbon particles. CHF 1000 resin is dissolved in dimethyl acetamide to form the dispersion solution. A mass percentage of the CHF 1000 resin in the dispersion solution is about 5%.

In step (b2), the active surface agent is used to restrain agglomeration of the carbon particles. Thus, in the present embodiment, isopropanol is used as the active surface agent. After the water and the active surface agent have been added into the dispersion solution, a process of mixing the dispersion solution is executed by ultrasonic dispersing or agitating.

In step (b3), a process of coating is executed by a spraying method, an immersing method, or a screen printing method. The above-described methods can ensure that the catalyst slurry is uniformly and densely coated on the carbon nanotube film. In order to reduce the cracks and voids in the catalyst layer 18, the drying method is executed at a low temperature. The drying process is selected from the group comprising an oven drying method and a sintering method.

The process of immerging the carbon nanotube structure into a catalyst-containing solution to obtain a carbon nanotube composite structure includes the substeps of: (b1') functionalizing the carbon nanotube structure; (b2') providing a catalyst-containing solution and putting the functionalized the carbon nanotube structure into the catalyst-containing solution; and (b3') drying the carbon nanotube structure to obtain an electrode of carbon nanotube composite structure.

In step (b1'), the functionalizing can be performed by treating the carbon nanotube structure with acid such as hydrochloric acid, sulfuric acid or nitric acid. In the present embodiment, the carbon nanotube structure is put into a mixture of sulfuric acid and nitric acid and treating by ultrasonic for about 2 hours. Then putting the carbon nanotube structure into an oxydol and treating by ultrasonic for about 1 hour. Finally, putting the carbon nanotube structure into a water and treating by ultrasonic till a PH value of the become 7.

In step (b2') the catalyst-containing solution can be a solution of metal or metal-salt, or a solution of enzymatic. In the present embodiment, the catalyst-containing solution is a solution of glucose oxidase. Then immerging the carbon nanotube structure into the solution of glucose oxidase for1∼5 days at the temperature of 4 °C.

The electrode can also be formed by the substeps of: (b1") providing at least one carbon nanotube film or yarn; (b2") forming a catalyst layer on a surface of a drawing carbon nanotube film or yarn; and (b3") forming a carbon nanotube composite structure as an electrode.

In step (b1"), the drawing carbon nanotube film or yam is obtained by the above described step (a1) to (a2). In step (b2"), the method of forming the catalyst layer can be selected from the group comprising chemical vapor deposition (CVD), sputtering, and plasma-assisted chemical vapor deposition et al. In the present embodiment, a layer of metal particles is formed by sputtering. Referring to FIG. 18, the metal particles dispersed on the carbon nanotube uniformly. In step (b3"), the forming a carbon nanotube composite structure can be performed by stacking a plurality of drawing carbon nanotube film or yarn, or twisting the drawing carbon nanotube film or yarn.

In step (c), the two electrodes are attached on the two opposite surfaces of the proton exchange membrane by a heat pressing process. While the electrodes include a carbon nanotube structure and a catalyst layer, the catalyst layer is configured for being sandwiched between the carbon nanotube structure and the proton exchange membrane. The material of the proton exchange membrane is selected from the group comprising perfluorosulfonic acid, polystyrene sulfonic acid, polystyrene trifluoroacetic acid, phenol formaldehyde resin acid, and hydrocarbons.

Finally, it is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

It is also to be understood that the above description and the claims drawn to a method may include some indication in reference to certain steps. However, the indication used is only to be viewed for identification purposes and not as a suggestion as to an order for the steps.

## Claims

1. A membrane electrode assembly comprising:
a proton exchange membrane having two opposite surfaces; and
an anode located on one surface of the proton exchange membrane and a cathode located on the other surface of the proton exchange membrane, wherein the anode and the cathode each comprise a gas diffusion layer and catalyst, wherein at least one of the gas diffusion layers comprises at least one carbon nanotube structure.

2. A membrane electrode assembly as claimed in claim 1, wherein the carbon nanotube structure comprises a plurality of ordered carbon nanotubes distributed uniformly therein, wherein the ordered carbon nanotubes are primarily oriented along the same direction or along several directions.

3. A membrane electrode assembly as claimed in either of claims 1 or 2, wherein the carbon nanotube structure comprises at least one carbon nanotube film, wherein the carbon nanotube film is formed by drawing from an array of carbon nanotubes, wherein the carbon nanotube film further comprises a plurality of successive carbon nanotubes joined end to end by van der Walls attractive force therebetween and the carbon nanotubes therein are primarily aligned along the same direction.

4. A membrane electrode assembly as claimed in claim 2 or 3, wherein the carbon nanotube structure comprises at least two carbon nanotube films stacked with each other, wherein an angle between the aligned directions of the carbon nanotubes in the two adjacent carbon nanotube films approximately ranges from above or equal to 0° to less than or equal to 90 °.

5. A membrane electrode assembly as claimed in claim 1, wherein the carbon nanotube structure comprises a plurality of disordered carbon nanotubes distributed uniformly therein, wherein the disordered carbon nanotubes are entangled with each other or parallel to a surface of the carbon nanotube structure.

6. A membrane electrode assembly as claimed in claim 1, 2 or 5, wherein the carbon nanotube structure comprises at least one carbon nanotube film, at least one carbon nanotube wire or combinations thereof.

7. A membrane electrode assembly as claimed in claim 1, 2, 5 or 6, wherein the carbon nanotube structure comprises a plurality of carbon nanotube wires, wherein the carbon nanotube wires is disposed side by side, disposed crossed or waved together.

8. A membrane electrode assembly as claimed in claim 1, 2, 5, or 6, wherein the carbon nanotube structure comprises both the carbon nanotube film and the carbon nanotube wire, wherein the carbon nanotube wire is disposed on at least one surface of the carbon nanotube film.

9. A membrane electrode assembly as claimed in any of claims 1 to 8, wherein the carbon nanotube structure comprises a plurality of micropores distributed in the carbon nanotube structure, wherein the diameters of the micropores approximately range from 1 to 500 nanometers.

10. A membrane electrode assembly as claimed in any of claims 1 to 9, wherein the catalyst is dispersed between the carbon nanotube structure and the proton exchange membrane or combined with the carbon nanotube structure to form a composite structure.

11. A membrane electrode assembly as claimed in claim 10 further comprising a plurality of carriers between the carbon nanotube structure and the proton exchange membrane, wherein the catalyst is dispersed on the surface of the carrier and the carriers are made of a material selected from the group consisting of graphite, carbon black, carbon fiber and carbon nanotubes.

12. A membrane electrode assembly as claimed in any of claims 1 to 11, wherein the catalyst is metal particles selected from the group consisting of platinum particles, gold particles, ruthenium particles and combination thereof.

13. A membrane electrode assembly comprising:
a proton exchange membrane having two opposite surfaces;
a cathode located on one of the two opposite surfaces of the proton exchange membrane, wherein the cathode comprises a gas diffusion layer and catalyst; and
an anode located on the other one of the two opposite surfaces of the proton exchange membrane, wherein the anode comprises at least one carbon nanotube structure and enzymatic catalyst.

14. A membrane electrode assembly as claimed in claim 13, wherein the enzymatic catalyst is dispersed between the carbon nanotube structure and the proton exchange membrane or combined with the carbon nanotube structure to form a composite structure.

15. A membrane electrode assembly as claimed in claim 13 or 14, wherein each carbon nanotube structure comprises a plurality of carbon nanotubes, wherein each carbon nanotube comprises a plurality of functional groups and the enzymatic catalyst is combined with the carbon nanotubes via the functional groups.
